# EUROPEAN PATENT APPLICATION

(11) **EP 4 501 119 A1**
(43) Date of publication of application: **05.02.2025**
(21) Application number: 23778957.3
(22) Date of filing: 15.02.2023
(51) Int. Cl.: A23D 9/00, A23G 1/36, A23G 1/54, A23L 5/00, A23L 29/10

(54) **OILY FOOD FOR COATING**

(30) Priority: 29.03.2022 JP 2022053209
(71) Applicant: Fuji Oil Holdings Inc., Izumisano-shi, Osaka 598-8540 (JP)
(72) Inventor: TOKUNAGA, Misaki, Izumisano-shi, Osaka 598-8540 (JP); KANADA, Yasufumi, Izumisano-shi, Osaka 598-8540 (JP)
(74) Representative: Becker, Eberhard
(86) International application number: PCT/JP2023/005113
(87) International publication number: WO 2023/188923

(57) **Abstract**

The present invention addresses the problem of providing an oily food for coating, the oily food having a low content of non-fat cacao solids, attaining good usability for coating, and having good gloss, the period of time required to solidify the oily food being suitable for continuous production. Furthermore, the present invention addresses the problem of providing a composite food that has little stickiness caused by aging when the oily food for coating is used for a confectionery or a bakery product. The problems of the present application can be solved using the oily food for coating, the oily food containing a certain amount of saturated fatty acids having carbon numbers of 12 and 14, and being blended with a combination of particular emulsifiers such as glycerine fatty acid esters and sucrose fatty acid esters. In order to attain better quality, the oily food for coating can be used, with interesterified fat being selected as a supply source of a portion of the saturated fatty acids having carbon numbers of 12 and 14.

## Description

### Technical Field

The present invention relates to an oily food for coating and a composite food coated with the oily food.

### Background Art

Oily foods such as chocolate containing an oil and/or fat composition and a saccharide are combined with various foods, used for various applications, and distributed on the market. Examples of the applications can include applications in which oil-based foods coat surfaces of Western confectioneries such as cakes, choux, and éclairs, bakery products such as baked confectioneries, Japanese confectioneries, bread, and doughnuts, frozen desserts, ice creams, and the like.

In many cases, oily foods which are generally used for coating are preferably those which do not require tempering for convenience in use. Further, it is required to solidify in a short time at room temperature for quick transfer to steps of conveyance and packaging after coating. In addition, after solidification, it is required to have a good gloss and sufficient bloom resistance for visually enhancing the desire to purchase and eat. In addition, as a matter of course, those having good meltability in the mouth and development of flavor when eaten are preferred.

In addition, for oily foods such as chocolate, materials with various color tones are required to increase the desire to purchase from the visual viewpoint.

Patent Document 1 discloses highly glossy chocolates for coating, which are used for coating, for covering, or for making Western fresh confectioneries, and a method for producing the same.

Patent Document 2 discloses a coating chocolate containing as little trans-unsaturated fatty acid as possible, which is resistant to peeling off.

Patent Document 3 discloses an invention relating to an oil and/or fat composition for a coating chocolate having gloss, resistance to peeling off, and resistance to perspiration.

### Citation List

### Patent Document

Patent Document 1: JP 2012-110268 A
Patent Document 2: JP 2009-017821 A
Patent Document 3: JP 2015-173614 A

### Summary of Invention

### Technical Problem

Patent Document 1 is an invention in which cocoa fibers that are contained in a large amount in fat-free cocoa solids and pulp fibers are essential components.

Patent Document 2 does not solve problems specific to chocolates for coating having a low fat-free cocoa solid content.

Patent Document 3 is an invention relating to an oil and/or fat suitable for coating particularly soft bakery products and does not solve problems specific to chocolates for coating having a low fat-free cocoa solid content, as in Patent Document 2.

As a result of investigation by the present inventors, there have been problems more than those that have been assumed so far, for providing an oily food for coating having a low fat-free cocoa solid content and a good gloss. Unlike oily foods containing a large amount of fat-free cocoa solids, oily foods having a low fat-free cocoa solid content require a long time for solidification after coating for achieving gloss after coating, and such a good gloss as obtained with oily foods containing a large amount of fat-free cocoa solids cannot be obtained.

The prior art documents presented above disclose inventions relating to a coating chocolate containing a certain content or higher of cocoa, particularly a certain amount or more of fat-free cocoa solids, but do not mention the occurrence of such problems with oily foods for coating having a low fat-free cocoa solid content.

Accordingly, an object of the present invention is to provide an oily food for coating having a low fat-free cocoa solid content, which has good coating workability, a time required for solidification suitable for continuous production, and a good gloss.

Another object of the present invention is to provide a composite food which is less sticky over time when the oily food for coating of the present invention is used in confectioneries and bakery products.

### Solution to Problem

The present inventors have conducted intensive studies to solve the above problems. As a result, they have found that, by adjusting types of and ratio among constituent fatty acids in an oil and/or fat and combining a specific emulsifier, an oily food can be obtained, which has a time required for solidification suitable for continuous production and a good gloss, and is less sticky, even when having a fat-free cocoa solid content of less than 3 wt.%.

That is, the present invention relates to:
(1) An oily food for coating, including:
   a fat-free cocoa solid content of 3 wt.% or less, and
   a cocoa butter content of from 0 to 10 wt.%,
   the oily food containing Emulsifier A and Emulsifier C, or Emulsifier B and Emulsifier C, and
   satisfying the following conditions 1) to 3):
      1) constituent fatty acids in an oil and/or fat of the oily food contain a total of from 15 wt.% to 50 wt.% of a saturated fatty acid having 12 carbons and a saturated fatty acid having 14 carbons;
      2) constituent fatty acids in an oil and/or fat of the oily food contain a total of from 30 wt.% to 45 wt.% of a saturated fatty acid having 16 carbons and a saturated fatty acid having 18 carbons; and
      3) constituent triglycerides in an oil and/or fat of the oily food contain from 5 to 16 wt.% of CN36,
   Emulsifier A: one or more emulsifiers selected from glycerin fatty acid esters having an HLB of less than 9, the glycerin fatty acid esters containing, as a main constituent fatty acid, a saturated fatty acid having from 16 to 24 carbons;
   Emulsifier B: one or more emulsifiers selected from sucrose fatty acid esters having an HLB of less than 3, the sucrose fatty acid esters containing, as a main constituent fatty acid, a saturated fatty acid having from 16 to 24 carbons;
   Emulsifier C: one or more emulsifiers selected from sucrose fatty acid esters having an HLB of 3 or more, the sucrose fatty acid esters containing, as a main constituent fatty acid, a saturated fatty acid having from 16 to 24 carbons;
   CN36: a triglyceride in which a total number of carbons of constituent fatty acids is 36 in the triglycerides in the oil and/or fat.
(2) The oily food for coating according to (1), wherein the emulsifiers contained are Emulsifier A and Emulsifier C.
(3) The oily food for coating according to (1) or (2), wherein the oil and/or fat of the oily food contains from 40 to 85 wt.% of an interesterified oil and/or fat having a melting point of from 32 to 42°C.
(4) The oily food for coating according to (3), wherein the interesterified oil and/or fat contained in the oil and/or fat of the oily food satisfies the following conditions 4) to 6):
   4) the interesterified oil and/or fat is a random interesterified oil;
   5) constituent fatty acids in the interesterified oil and/or fat contain a total of from 25 to 60 wt.% of a saturated fatty acid having 12 carbons and a saturated fatty acid having 14 carbons; and
   6) the interesterified oil and/or fat contains from 30 to 60 wt.% of triglycerides (CN36 to 42) in which a total number of carbons of constituent fatty acids is from 36 to 42 in the triglycerides in the interesterified oil and/or fat.
(5) An oily food for coating, including:
   a fat-free cocoa solid content of 3 wt.% or less, and
   a cocoa butter content of from 0 to 10 wt.%,
   the oily food containing Emulsifier A and Emulsifier C, or Emulsifier B and Emulsifier C, and
   an oil and/or fat of the oily food satisfying the following conditions:
      (a) the oil and/or fat contains from 40 to 85 wt.% of an interesterified oil and/or fat having a melting point of from 32 to 42°C; and
      (b) the oil and/or fat contains from 20 to 50 wt.% of lauric hard butter;
   Emulsifier A: one or more emulsifiers selected from glycerin fatty acid esters having an HLB of less than 9, the glycerin fatty acid esters containing, as a main constituent fatty acid, a saturated fatty acid having from 16 to 24 carbons;
   Emulsifier B: one or more emulsifiers selected from sucrose fatty acid esters having an HLB of less than 3, the sucrose fatty acid esters containing, as a main constituent fatty acid, a saturated fatty acid having from 16 to 24 carbons; and
   Emulsifier C: one or more emulsifiers selected from sucrose fatty acid esters having an HLB of 3 or more, the sucrose fatty acid esters containing, as a main constituent fatty acid, a saturated fatty acid having from 16 to 24 carbons.
(6) A method for producing the oily food for coating according to any one of (1), (2), and (5).
(7) A method for producing the oily food for coating according to (3).
(8) A method for producing the oily food for coating according to (4).
(9) A composite food coated with the oily food for coating according to any one of (1), (2), and (5).
(10) A composite food coated with the oily food for coating according to (3).
(11) A composite food coated with the oily food for coating according to (4).
(12) A method for producing a composite food having a good gloss by using the oily food for coating according to any one of (1), (2), and (5).
(13) A method for producing a composite food having a good gloss by using the oily food for coating according to (3).
(14) A method for producing a composite food having a good gloss by using the oily food for coating according to (4).
(15) A method for improving gloss by using the oily food for coating according to any one of (1), (2), and (5).
(16) A method for improving gloss by using the oily food for coating according to (3).
(17) A method for improving gloss by using the oily food for coating according to (4).

In other words, the present invention relates to:
(1) An oily food for coating, including:
   a fat-free cocoa solid content of 3 wt.% or less, and
   a cocoa butter content of from 0 to 10 wt.%,
   the oily food containing Emulsifier A and Emulsifier C, or Emulsifier B and Emulsifier C, and
   satisfying the following conditions 1) to 3):
      1) constituent fatty acids in an oil and/or fat of the oily food contain a total of from 15 wt.% to 50 wt.% of a saturated fatty acid having 12 carbons and a saturated fatty acid having 14 carbons;
      2) constituent fatty acids in an oil and/or fat of the oily food contain a total of from 30 wt.% to 45 wt.% of a saturated fatty acid having 16 carbons and a saturated fatty acid having 18 carbons; and
      3) constituent triglycerides in an oil and/or fat of the oily food contain from 5 to 16 wt.% of CN36,
   Emulsifier A: one or more emulsifiers selected from glycerin fatty acid esters having an HLB of less than 9, the glycerin fatty acid esters containing, as a main constituent fatty acid, a saturated fatty acid having from 16 to 24 carbons;
   Emulsifier B: one or more emulsifiers selected from sucrose fatty acid esters having an HLB of less than 3, the sucrose fatty acid esters containing, as a main constituent fatty acid, a saturated fatty acid having from 16 to 24 carbons;
   Emulsifier C: one or more emulsifiers selected from sucrose fatty acid esters having an HLB of 3 or more, the sucrose fatty acid esters containing, as a main constituent fatty acid, a saturated fatty acid having from 16 to 24 carbons;
   CN36: a triglyceride in which a total number of carbons of constituent fatty acids is 36 in the triglycerides in the oil and/or fat.
(2) The oily food for coating according to (1), wherein the emulsifiers contained are Emulsifier A and Emulsifier C.
(3) The oily food for coating according to (1) or (2), wherein the oil and/or fat of the oily food contains from 40 to 85 wt.% of an interesterified oil and/or fat having a melting point of from 32 to 42°C.
(4) The oily food for coating according to (3), wherein the interesterified oil and/or fat contained in the oil and/or fat of the oily food satisfies the following conditions 4) to 6):
   4) the interesterified oil and/or fat is a random interesterified oil;
   5) constituent fatty acids in the interesterified oil and/or fat contain a total of from 25 to 60 wt.% of a saturated fatty acid having 12 carbons and a saturated fatty acid having 14 carbons; and
   6) the interesterified oil and/or fat contains from 30 to 60 wt.% of triglycerides (CN36 to 42) in which a total number of carbons of constituent fatty acids is from 36 to 42 in the triglycerides in the interesterified oil and/or fat.
(5) An oily food for coating, including:
   a fat-free cocoa solid content of 3 wt.% or less, and
   a cocoa butter content of from 0 to 10 wt.%,
   the oily food containing Emulsifier A and an Emulsifier C, or Emulsifier B and Emulsifier C,
   the oil and/or fat of the oily food satisfying the following conditions:
      (a) the oil and/or fat contains from 40 to 85 wt.% of an interesterified oil and/or fat having a melting point of from 32 to 42°C; and
      (b) the oil and/or fat contains from 20 to 50 wt.% of lauric hard butter;
   Emulsifier A: one or more emulsifiers selected from glycerin fatty acid esters having an HLB of less than 9, the glycerin fatty acid esters containing, as a main constituent fatty acid, a saturated fatty acid having from 16 to 24 carbons;
   Emulsifier B: one or more emulsifiers selected from sucrose fatty acid esters having an HLB of less than 3, the sucrose fatty acid esters containing, as a main constituent fatty acid, a saturated fatty acid having from 16 to 24 carbons; and
   Emulsifier C: one or more emulsifiers selected from sucrose fatty acid esters having an HLB of 3 or more, the sucrose fatty acid esters containing, as a main constituent fatty acid, a saturated fatty acid having from 16 to 24 carbons.
(6) A method for producing the oily food for coating according to any one of claims (1) to (5).
(7) A composite food coated with the oily food for coating according to any one of claims (1) to (5).
(8) A method for producing a composite food having a good gloss by using the oily food for coating according to any one of claims (1) to (5).
(9) A method for improving gloss by using the oily food for coating according to any one of claims (1) to (5).

### Advantageous Effects of Invention

The present invention can provide an oily food having good coating workability, a time required for solidification suitable for continuous production, and a good gloss, by selecting interesterified oil and/or fats as a part of plant oils and/or fats to be blended, even when the oily food for coating has a low fat-free cocoa solid content. Furthermore, the present invention can provide a composite food which is less sticky over time when the oily food for coating of the present invention is used in confectioneries and bakery products, by selecting interesterified oil and/or fats as a part of plant oils and/or fats to be blended.

### Description of Embodiments

The present invention will be described in detail below.

The oily food of the present invention is a food in which oils and/or fats form a continuous phase, and particularly refers to chocolates. The term "chocolate(s)" as used herein is not limited to chocolate, quasi-chocolate, and chocolate-using foods as defined by the Fair Trade Council of the Japan National Chocolate Industry and the Fair Trade Council of the Chocolate-Using Foods, and refers to foods containing an oil and/or fat as an essential component and including oil and/or fat processed foods which use cocoa mass, cocoa, whole milk powder, dried fruit juice powder, dried vegetable powder, cocoa butter, cocoa butter substitutes, hard butter and the like.

The oily food for coating of the present invention refers to chocolates for coating (coating or covering) the whole or a part of a surface of a confectionery or bakery food.

The fat-free cocoa solid refers to a portion of cocoa-derived materials, such as cocoa mass or cocoa, from which cocoa butter and water have been removed. In the present invention, a blending amount of the fat-free cocoa solid is 3 wt.% or less. Unlike so-called bitter chocolates and/or sweet chocolates, chocolates such as white chocolates, caramel chocolates or strawberry chocolates in which fat-free cocoa solids are not blended or blended in a small amount is targeted.

When the fat-free cocoa solid content is more than 3 wt.%, an oily food for coating having a high solidification rate and a good gloss can be prepared even with a known oil and/or fat composition. However, the addition of the fat-free cocoa solids may result in coloration of the oily food for coating with a color derived from the fat-free cocoa solids, leading to dull color tone. Therefore, it may be difficult to obtain an oily food for coating having a vivid color such as white chocolate or strawberry chocolate.

When the fat-free cocoa solid content is 3 wt.% or less, a known oil and/or fat composition may require a long time for solidification, leading to a reduction in gloss after solidification. The present invention is effective when the fat-free cocoa solid content is low, and is particularly effective when it is less than 1 wt.%. Further, when the fat-free cocoa solids are not contained, the present invention is more likely to be effective.

In the present invention, the oily food contains Emulsifier A or Emulsifier B. Emulsifier A refers to one or more emulsifiers selected from glycerin fatty acid esters having an HLB value of less than 9, the glycerin fatty acid esters containing, as a main constituent fatty acid, a saturated fatty acid having from 16 to 24 carbons.

Here, the main constituent fatty acid refers to a fatty acid contained, as a fatty acid constituting the emulsifier, in 90 wt.% or more in the product.

Examples of the glycerin fatty acid ester include a monoglycerin fatty acid ester, a diglycerin fatty acid ester, and a polyglycerin fatty acid ester in which a plurality of glycerin fatty acid esters are polymerized, and also include a glycerin fatty acid ester in which a plurality of hydroxyl groups of glycerin are ester-bonded.

The HLB value of the glycerin fatty acid ester is preferably from 1 to 8.5, and more preferably from 2 to 6. The main constituent fatty acid of the glycerin fatty acid ester is preferably stearic acid or behenic acid.

The HLB of an emulsifier is an abbreviation of Hydrophilic-Lipophilic Balance, which refers to a balance between hydrophilicity and lipophilicity, and is an index for determining whether the emulsifier is hydrophilic or lipophilic. The HLB takes a value of from 0 to 20, and the smaller the HLB value, the stronger the lipophilicity.

Emulsifier B refers to one or more emulsifiers selected from sucrose fatty acid esters having an HLB value of less than 3, the glycerin fatty acid esters containing, as a main constituent fatty acid, a saturated fatty acid having from 16 to 24 carbons.

Emulsifier A or B is contained in an amount of preferably from 0.01 to 1.0 wt.%, more preferably from 0.05 to 0.8 wt.%, and even more preferably from 0.1 to 0.6 wt.% in the oily food.

In the present invention, the oily food contains Emulsifier C. Emulsifier C refers to one or more emulsifiers selected from sucrose fatty acid esters having an HLB value of 3 or more, the glycerin fatty acid esters containing, as a main constituent fatty acid, a saturated fatty acid having from 16 to 24 carbons. The HLB value of the sucrose fatty acid ester is preferably from 3 to 15, and more preferably from 3 to 10.

The main constituent fatty acid of the sucrose fatty acid ester is preferably palmitic acid, stearic acid or behenic acid.

Emulsifier C is contained in an amount of preferably from 0.01 to 1.0 wt.%, more preferably from 0.05 to 0.8 wt.%, and even more preferably from 0.1 to 0.6 wt.% in the oily food.

In the present invention, when Emulsifiers A, B and C are used in combination of Emulsifier A and Emulsifier C or Emulsifier B and Emulsifier C, an oily food having good coating workability, a time required for solidification suitable for continuous production, and a good gloss can be obtained. In addition, stickiness over time can be suppressed. When a combination other than the combination of Emulsifier A and Emulsifier C or the combination of Emulsifier B and Emulsifier C is used, an expected effect may not be obtained.

An emulsifier other than Emulsifier A or B and Emulsifier C can be appropriately added to the oily food for coating of the present invention.

In the present invention, the oil and/or fat content of the oily food is preferably from 20 to 65 wt.% with respect to the entire oily food. The content is more preferably from 30 to 50 wt.%, and even more preferably from 32 to 45 wt.%. By setting the oil and/or fat content in the preferable range, an oily food having better coating workability can be prepared. In addition, an oily food having a good gloss can be prepared.

The oil and/or fat content of the oily food means wt.% including all the oils and/or fats contained in whole milk powder or the like.

The oil and/or fat contained in the oily food for coating of the present invention contains, as constituent fatty acids in the oil and/or fat, a saturated fatty acid having 12 carbons and a saturated fatty acid having 14 carbons in a total amount of from 15 to 50 wt.%. The total content is preferably from 16 to 48 wt.%, and more preferably from 17 to 46 wt.%. If the saturated fatty acid having 12 carbons and the saturated fatty acid having 14 carbons are contained in an appropriate amount in the oil and/or fat, an appropriate time required for solidification and a good gloss can be obtained. If the total content of the saturated fatty acids is too high, the gloss may be deteriorated. On the other hand, if the total content is too low, the quality may not be suitable for solidification.

The fatty acid composition of the oil and/or fat shall be a value as measured in accordance with the method specified in Japanese Oil Chemists' Society Standard Oil Analysis Test Method (1996 edition) 2.4.1.2 Methyl Esterification Method (boron trifluoride-methanol method).

The oil and/or fat contained in the oily food of the present invention contains, as constituent fatty acids in the oil and/or fat, a saturated fatty acid having 16 carbons and a saturated fatty acid having 18 carbons in a total amount of from 30 to 45 wt.%. The total content is preferably from 31 to 43 wt.%, and more preferably from 32 to 41 wt.%. If the saturated fatty acid having 16 carbons and the saturated fatty acid having 18 carbons are contained in an appropriate amount in the oil and/or fat, an appropriate time required for solidification and a good gloss can be obtained, and a flavor having a sense of unity as a composite food when the oily food is coated on another food can be obtained.

When the total content is too high, the meltability in the mouth may be deteriorated. If the total content is too low, it may take a long time to solidify or the gloss may be deteriorated.

The oil and/or fat contained in the oily food of the present invention contains from 5 to 16 wt.% of a triglyceride having a total number of carbons of constituent fatty acids of CN36 in triglycerides constituting the oil and/or fat. The content of the triglyceride is preferably from 5 to 15 wt.%, and more preferably from 6 to 15 wt.%. If the triglyceride with CN36 is contained, as the triglyceride constituting the oil and/or fat, in an appropriate amount, in the oil and/or fat, an appropriate time required for solidification and a good gloss can be obtained.

A small amount of the triglyceride may result in slow solidification. A large amount of the triglyceride not only may deteriorate the gloss, but also may be likely to cause cracking or peeling at the time of coating.

The "CN36" represents a triglyceride in which a total number of carbons of constituent fatty acids is 36 in the triglycerides in the oil and/or fat.

The total number of carbons of the fatty acids constituting the triglycerides in the oil and/or fat was measured in accordance with 2.4.6 Triacylglycerol Composition (gas chromatography) in Standard Methods for Analysis of Fats, Oils and Related Materials established by Japan Oil Chemists' Society.

The oily food of the present invention has a cocoa butter content of from 0 to 10 wt.% in the oily food. The cocoa butter contributes to meltability in the mouth, which is typical of chocolate. However, depending on the types of the oils and/or fats to be combined, solidification may be slow or the gloss may be deteriorated due to generation of bloom. The cocoa butter content is preferably from 0 to 9 wt.%, and more preferably from 0 to 8 wt.%.

In a more preferred embodiment of the present invention, an interesterified oil and/or fat is contained. The interesterified oil and/or fat is not particularly limited, and examples of usable interesterified oils and/or fats can include vegetable oils and/or fats, such as soybean oil, sunflower seed oil, cottonseed oil, rapeseed oil, high erucic acid rapeseed oil, peanut oil, rice bran oil, corn oil, safflower oil, olive oil, kapok oil, sesame oil, evening primrose oil, palm oil, palm kernel oil, coconut oil, and medium-chain triglycerides (MCT); animal oils and/or fats such as milk fat, beef tallow, and lard; and their hardened oils, fractionated oils, hardened fractionated oils, fractionated hardened oils, and processed oils and/or fats obtained by interesterification and the like; and furthermore mixed oils and/or fats thereof.

The interesterified oil and/or fat is preferably so-called medium-melting-point hard butter having a melting point of from 32 to 42°C. The melting point is more preferably from 32 to 40°C, and even more preferably from 33 to 38°C.

The melting point in the present invention refers to a rising melting point. Specifically, the melting point was measured in accordance with the method specified in Rising Melting Point of Japanese Oil Chemists' Society Standard Oil Analysis Test Method.

The interesterified oil and/or fat is preferably contained in an amount of from 40 to 85 wt.% in the oil and/or fat of the oily food. The amount is preferably from 41 to 82 wt.%, and more preferably from 42 to 80 wt.%. By incorporating the interesterified oil and/or fat, the oily food can have an appropriate solidification rate and a good gloss. The interesterified oils and/or fats used in the present invention may be used singly, or two or more thereof may be used in combination.

Methods for interesterification of an oil and/or fat are classified into: a method in which only fatty acids bonded to 1- and 3-positions of a triglyceride are specifically exchanged using an enzyme (lipase) (1,3-position-specific interesterification method); and a method in which fatty acids are nonspecifically exchanged using an enzyme or a metal catalyst (for example, sodium methylate) regardless of the bonding positions (random interesterification). The oil and/or fat used in the oily food for coating of the present invention is preferably an oil and/or fat obtained by the latter random interesterification.

The fatty acids constituting the interesterified oil and/or fat include a saturated fatty acid having 12 carbons and a saturated fatty acid having 14 carbons in an amount of preferably from 25 to 60 wt.%, more preferably from 28 to 55 wt.%, and most preferably from 30 to 53 wt.%.

When the amount of the saturated fatty acid having 12 carbons and the saturated fatty acid having 14 carbons, which are the fatty acids constituting the interesterified oil and/or fat, is in the preferable range, an oily food for coating having an appropriate time required for solidification and a good gloss is obtained.

The triglyceride with CN36 to 42 contained in the interesterified oil and/or fat is contained in an amount of preferably from 30 to 60 wt.%, more preferably from 32 to 55 wt.%, and most preferably from 33 to 53 wt.%.

The "CN36 to 42" represents a total amount of triglycerides in which a total number of carbons of constituent fatty acids is from 36 to 42 in the triglycerides in the oil and/or fat.

When the amount of CN36 to 42 contained in the interesterified oil and/or fat is in the preferable range, an oily food for coating having an appropriate time required for solidification and a good gloss is obtained.

In a preferred embodiment of the present invention, the oily food for coating contains lauric hard butter.

The lauric hard butter refers to an oil and/or fat containing a certain amount of lauric acid and myristic acid, which are the saturated fatty acid having 12 carbons and the saturated fatty acid having 14 carbons in the constituent fatty acid composition. More particularly, it refers to an oil and/or fat in which the content of the saturated fatty acid having 12 carbons and the saturated fatty acid having 14 carbons in the constituent fatty acid composition is 60 wt.% or more, and CN36 to 42 is 50 wt.% or more.

The lauric hard butter is contained in an amount of preferably from 20 to 50 wt.%, and more preferably from 22 to 48 wt.% in the oil and/or fat of the oily food.

As a result of realization of the present invention, it is also possible to provide an oily food for coating with reduced trans fatty acids.

Trans fatty acid-containing oils and/or fats have been considered as problematic in risk of trans acids on health from the nutritional viewpoint in recent years. Therefore, there is a great demand for an oily food for coating having a non-tempering, non-trans acid type oil and/or fat composition as an alternative thereto.

The composite food coated with the oily food for coating in the present invention can be produced by coating a food with the oily food for coating of the present invention, and is not particularly limited as long as it is a confectionery, fruit, or bakery product. Examples of the confectionery can include manju (steamed bean-jam bun), steamed yokan (sweet beans jelly), castella, dorayaki (bean-jam pancake), imagawayaki (thick pancake containing bean jam), taiyaki (Japanese fish-shaped pancake filled with bean jam), kintsuba (sweet bean paste wrapped in wheat-flour dough), waffles, chestnut manju, mooncakes, bolo (small round cookie), yatsuhashi (cinnamon-seasoned rice flour cracknel), rice crackers, karinto (fried dough cookie), sponge cakes, Swiss rolls, angel cakes, pound cakes, Baumkuchen, fruit cakes, madeleines, cream puffs, éclairs, mille-feuille, apple pies, tarts, biscuits, cookies, crackers, steamed bread, pretzels, wafers, snacks, pizza pies, crepes, souffles, and beignets. Examples of the fruit can include banana, apple and strawberry. Examples of the bakery product can include white bread, hot dog buns, fruit bread, corn bread, butter rolls, hamburger buns, doughnuts, French bread, rolls, sweet bread, sweet dough, hardtack, muffins, bagels, croissants, Danish pastries, naan bread.

Examples of the composite food which is easy to obtain the effects of good workability and a good gloss of the oily food for coating of the present invention can include confectioneries such as waffle, Baumkuchen and éclairs, and bakery products such as hot dog buns, butter roll buns, doughnuts, croissants and Danish pastries.

The method for producing the oily food for coating of the present invention can be carried out in the same manner as that for producing a general chocolate. Specifically, the oily food for coating can be obtained by appropriately selecting and mixing raw materials such as a saccharide, various powdered foods such as powdered milk, cocoa mass, cocoa powder, an emulsifier, a flavor, a pigment and the like with an oil and/or fat, and performing rolling and conching or mixing treatment.

Among them, as a more preferable production method, a sucrose fatty acid ester having an HLB of 3 or more is added before rolling and subjected to grinding treatment in the same manner as for the powdered food.

The oily food for coating obtained by the present invention is solidified in a time suitable for continuous production. The solidification is evaluated based on a time required until the oily food does not adhere to a finger even when touched on its surface with the finger immediately after the oily food in a molten state is coated on a confectionery or bakery product.

In continuous production, solidification may be carried out under refrigerated conditions, but the oily food for coating of the present invention can also be solidified at room temperature. In the case of solidification at room temperature, the time required for solidification suitable for continuous production is 10 minutes or less. The time is preferably 7 minutes or less.

The oily food for coating of the present invention has a good gloss after coating and solidification. Also, the gloss can be simply evaluated based on the glossiness measured by a glossmeter. For example, a handy glossmeter <Gloss Checker> HORIBA IG-320 available from HORIBA, Ltd. is suitably used.

In the present invention, as an example of measurement results, the glossiness (incident angle: 60°) at the time of solidification at 20°C is 7 or more, which is a good gloss. Hereinafter, unless otherwise specified, the "glossiness" is measured under the condition for measuring the glossiness (incident angle: 60°) at the time of solidification at 20°C.

In addition, an oily food containing a large amount of fat-free cocoa solids tends to easily have a good gloss. On the other hand, it has been difficult to acquire a high glossiness in an oily food having a low fat-free cocoa solid content. According to the present invention, even when the fat-free cocoa solid content is 3% or less, the glossiness reaches 7 or more, and, in some cases, 10 or more.

As a method for measuring the glossiness, chocolate is molten at 50°C, coated on a plastic film, and solidified under an atmosphere of 20°C, and then the glossiness is measured by a glossiness measuring instrument.

The numerical value of the glossiness is suitably 7 or more, and preferably 10 or more.

In the oily food for coating of the present invention, stickiness over time is suppressed. The stickiness is caused by a phenomenon such as bleeding of oil or water onto the surface of the oily food for coating when the coated composite food is stored. While the state varies depending on the type of confectionery or bakery to be coated, if the stickiness is caused, it may adhere to a packaging material, resulting in impaired appearance.

### Examples

Hereinafter, the present invention will be described in more detail with reference to Examples, but the spirit of the present invention is not limited to the following Examples. In the Examples, values in % and parts are all on a weight basis.

### (Preparation of Oil and/or Fat)

Oils and/or fats having the fatty acid compositions shown in Table 1 were prepared. A fractionated palm oil hard fraction, coconut oil, and an extremely hardened high erucic acid rapeseed oil were mixed at a predetermined ratio, and the mixture was subjected to random interesterification with sodium methylate. The obtained interesterified oil was purified by a known method to obtain a vegetable oil and/or fat a. The extremely hardened high erucic acid rapeseed oil was further added to the vegetable oil and/or fat a to obtain an interesterified oil and/or fat A shown in Table 1.

In the present invention, the extremely hardened high erucic acid rapeseed oil refers to one having an erucic acid content of 30 mass% or more in the constituent fatty acid composition.

The fractionated palm oil hard fraction and coconut oil were subjected to random interesterification with sodium methylate. The obtained interesterified oil was purified by a known method to obtain an interesterified oil and/or fat B shown in Table 1.

A fractionated palm oil soft fraction having an iodine value of 58 and an extremely hardened high erucic acid rapeseed oil were mixed at a predetermined ratio, and an immobilized lipase "Lipozymes TL-IM" available from Novozymes was used to prepare an interesterified oil and/or fat C as a randomly interesterified oil and/or fat. The method of random interesterification will be shown below.

The oil /fat was dehydrated under reduced pressure to adjust the water content to 100 ppm. Further, "Lipozymes TL-IM" was added in an amount of 1 wt.%, and the mixture was stirred at a reaction temperature of 70°C for 30 hours in a closed vessel to carry out an interesterification reaction, followed by removal of the immobilized lipase by filtration. The resulting randomly interesterified oil and/or fat was purified by a known method to obtain an interesterified oil and/or fat C. The composition of the interesterified oil and/or fat C is presented in Table 1.

A fractionated palm oil hard fraction, coconut oil, and an extremely hardened high erucic acid rapeseed oil were subjected to random interesterification with sodium methylate. The obtained interesterified oil was purified by a known method to obtain an interesterified oil and/or fat D shown in Table 1.

A fractionated palm oil hard fraction, coconut kernel oil, and a hardened high erucic acid rapeseed oil were subjected to random interesterification with sodium methylate. The obtained interesterified oil was purified by a known method to obtain an interesterified oil and/or fat E shown in Table 1.

In the following tables, C12, C14, C16, and C18 represent saturated fatty acids having 12, 14, 16, and 18 carbons, respectively, and "C12 + C14" and "C16 + C18" represent total amounts of the respective saturated fatty acids.

"CN36" represents an amount of a triglyceride in which a total number of carbons of constituent fatty acids is 36 in the triglycerides in the oil and/or fat, and "CN36 to CN42" represents a total amount of triglycerides in which a total number of carbons of constituent fatty acids is from 36 to 42 in the triglycerides in the oil and/or fat.

**[Table 1]**

| | Interesterified oil and/or fat A | Interesterified oil and/or fat B | Interesterified oil and/or fat C | Interesterified oil and/or fat D | Interesterified oil and/or fat E |
|---|---|---|---|---|---|
| C12 + C14 [%] | 32.3 | 44.5 | 1.2 | 49.3 | 46.7 |
| C16 + C18 [%] | 39.6 | 41.8 | 43.6 | 31.0 | 32.1 |
| C22 [%] | 4.7 (out of which 0.4 is added later) | 0 | 1.4 | 4.9 | 4.6 |
| CN36 [%] | 6.2 | 11.2 | 2.6 | 11.3 | 8.4 |
| CN36 to CN42 [%] | 35.7 | 52.7 | 4.6 | 49.1 | 44.5 |
| Melting point [°C] | 34.5 | 37.0 | 39.0 | 34.3 | 36.0 |
| Origin raw material | Palm, coconut, high erucic rapeseed | Palm, coconut | Palm, high erucic acid rapeseed | Palm, coconut, high erucic acid rapeseed | Palm, palm kernel, high erucic acid rapeseed |

The following oils and/or fats were used as the lauric hard butter.

As the vegetable oil and/or fat L, an oil and/or fat obtained by extremely hardening a fractionated palm kernel oil hard fraction and then purifying the extremely hardened fraction by a known method was used. C12 + C14 was 77 wt.%, and CN36 to CN42 was 74.6 wt.%.

As the vegetable oil and/or fat M, an oil and/or fat obtained by mixing palm kernel oil and palm oil at a ratio of 95:5, extremely hardening the mixture, and then purifying the extremely hardened mixture by a known method was used. C12 + C14 was 61.1 wt.%, and CN36 to CN42 was 54 wt.%.

As the vegetable oil and/or fat N, an oil and/or fat obtained by hardening palm kernel oil to attain an iodine value of 2.5 and then purifying the hardened palm kernel oil by a known method was used. C12 + C14 was 63 wt.%, and CN36 to CN42 was 56.6 wt.%.

As the vegetable oil and/or fat X, an oil and/or fat obtained by subjecting a soft fraction of a fractionated palm oil having an iodine value of 68 to random interesterification with sodium methylate, followed by purification by a known method was used.

As the vegetable oil and/or fat Y, a fractionated soft palm oil having an iodine value of 68 was used.

Edible rapeseed oil was used as the vegetable oil and/or fat Z.

### (Method for Preparing Oily Food for Coating)

As a preliminary examination, cocoa, sugar and whole milk powder were mixed with a part of the molten vegetable oil and/or fat in a mixer according to the formulations as shown in Table 2, and the mixtures were ground in a roll refiner, followed by mixing while adding the remaining oil and/or fat and lecithin.

Baumkuchen was coated with the obtained oily foods and evaluated according to the following evaluation methods.

### • Coating test: solidification time

The prepared oily foods (4.0 g (± 1.0 g)) were coated, in a molten state at 50°C, on the surface of Baumkuchen (available from Ace Bakery Co., Ltd.: thick-sliced Baumkuchen). While the adhesion method is not particularly limited, about one third of the Baumkuchen was immersed in the oily food in a molten state, and then lifted up and allowed to stand at room temperature of 20°C with a portion to which the oily food adhered facing upward.

The time required for solidification at rest was measured.

Under the criteria that (⊚): 7 minutes or less, ○: 10 minutes or less, and ×: more than 10 minutes, ○ and ⊚ were determined to be acceptable quality.

### • Evaluation of gloss: glossiness

For evaluating the gloss, the glossiness was measured.

The glossiness was measured with a gloss checker (HORIBA IG-320, incident angle: 60°) after chocolates were coated on a plastic film at 50°C and solidified at 20°C for 1 hour.

When the glossiness was 7 or more, the gloss was judged to be good, and when the glossiness was 10 or more, the gloss was judged to be particularly good.

### _{•} Evaluation of gloss: visual observation of appearance

For the gloss, the state in which the Baumkuchen was coated with the oily foods was also visually confirmed.

Evaluation was carried out according to the following criteria. ○ or better were determined to be acceptable quality.
⊚: Particularly good, ○: Good, ×: Poor

### • Flavor

The Baumkuchen coated with the oily foods subjected to the coating test was stored at 20°C for 2 days, and then the flavor was evaluated. The flavor was evaluated based on whether or not the oily foods were good as composite foods, not as simple substances.

Evaluation was carried out according to the following criteria. ○ or better was determined to be acceptable quality.
⊚: The sense of unity in flavor and meltability in the mouth is particularly good, ○: The sense of unity in flavor and meltability in the mouth is good, Δ: Lack of sense of unity, ×: Poor meltability in the mouth and flavor

### • Stickiness

The Baumkuchen coated with the oily foods subjected to the coating test was placed in a packaging material and stored at 20°C for 2 days, and then surface stickiness was observed. Evaluation was carried out according to the following criteria. ○ or better was determined to be acceptable quality.
⊚: No stickiness and particularly good, ○: Slight bleeding of oil on the surface but no adhesion to the packaging material and good, Δ: Partial adhesion to the packaging material, ×: Remarkable adhesion to the packaging material and poor

When all of the above evaluations were ○ or better and the glossiness was 7 or higher, the overall quality was determined to be good.

**[Table 2]**

| | Reference Example 1 | Reference Example 2 | Comparative Example 1 | Comparative Example 2 |
|---|---|---|---|---|
| Cocoa [parts] | 17.7 | 8.2 | 4.7 | 0 |
| Whole milk powder [parts] | 7.0 | 7.0 | 7.0 | 7.0 |
| Sugar [parts] | 30.0 | 39.5 | 43.0 | 47.7 |
| Cocoa butter [parts] | 2.5 | 2.5 | 2.5 | 2.5 |
| Plant oil and/or fat X [parts] | 7.0 | 7.0 | 7.0 | 7.0 |
| Interesterified oil and/or fat A [parts] | 25.3 | 25.3 | 25.3 | 25.3 |
| Plant oil and/or fat L [parts] | 3.0 | 3.0 | 3.0 | 3.0 |
| Plant oil and/or fat M [parts] | 7.5 | 7.5 | 7.5 | 7.5 |
| Lecithin [parts] | 0.3 | 0.3 | 0.3 | 0.3 |
| Solidification time | ⊚ 2'25" | ⊚ 2'09" | ⊚ 2'06" | ⊚ 6'51" |
| Glossiness | 7.2 | 5.9 | 5.9 | 5.9 |
| Appearance gloss | ⊚ 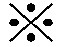 | ○ 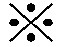 | ○ 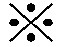 | × |
| Flavor | ○ | ○ | ○ | ○ |
| Stickiness | ○ | ○ | Δ | Δ |
| Total oil and/or fat content [%] | 49.0 | 47.9 | 47.5 | 47.0 |
| Fat-free cocoa solid content [%] | 15.0 | 7.0 | 4.0 | 0 |
| Dietary fiber amount [%] | 4.8 | 2.2 | 1.3 | 0 |
| Cocoa butter amount [%] | 4.4 | 3.4 | 3.0 | 2.5 |
| (Interesterified oil and/or fat)/(oil and/or fat) [%] | 65.8 | 67.2 | 67.8 | 68.5 |
| (C12 + C14)/(oil and/or fat) [%] | 31.5 | 32.2 | 32.4 | 32.8 |
| (C16 + C18)/oil and/or fat [%] | 38.8 | 38.3 | 38.1 | 37.9 |
| (CN36)/(oil and/or fat) [%] | 8.9 | 9.1 | 9.2 | 9.3 |
| Emulsifier A | Absent | Absent | Absent | Absent |
| Emulsifier C | Absent | Absent | Absent | Absent |
| Random interesterification | Present | Present | Present | Present |

As a result, in the Comparative Example having a low fat-free cocoa solid content, both the glossiness and the appearance gloss were poor.

The Reference Example containing a large amount of fat-free cocoa solids was quickly solidified and had a good appearance gloss. In the examples with the mark 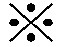 , the visual appearance gloss was more excellent than the numerical values of the glossiness. Therefore, they were evaluated better than the numerical values of the glossiness.

As Example 1, according to the blending amounts shown in Table 3, the vegetable oil and/or fat X, interesterified oil and/or fat A, vegetable oil and/or fat L, vegetable oil and/or fat M and cocoa butter were molten, a part of which was added to a mixture of whole milk powder, sugar and Emulsifier C1. They were mixed by a mixer while heating to 50°C, the mixture was ground by a roll refiner, followed by mixing while adding the remaining oil and/or fat, lecithin and Emulsifier A1 molten in the oil and/or fat to obtain a white chocolate-like oily food. The oily food was evaluated in accordance with the above-described evaluation methods such as the coating test using Baumkuchen. Those added with and not added with Emulsifier A1 and those added with and not added with Emulsifier C1 were prepared by the same method as in Example 1, and evaluated in the same manner.

As Emulsifier A, a decaglycerin heptaester, which is a polyglycerin fatty acid ester with an HLB of 4, having behenic acid as the main constituent fatty acid was used as Emulsifier A1.

As Emulsifier C, an emulsifier, which is a sucrose fatty acid ester with an HLB of 7, having stearic acid as the main constituent fatty acid was used as Emulsifier C1.

The evaluation results are summarized in Table 3.

**[Table 3]**

| | Comparative Example 2 | Comparative Example 3 | Comparative Example 4 | Example 1 |
|---|---|---|---|---|
| Whole milk powder [parts] | 7.0 | 7.0 | 7.0 | 7.0 |
| Sugar [parts] | 47.7 | 47.7 | 47.7 | 47.7 |
| Cocoa butter [parts] | 2.5 | 2.5 | 2.5 | 2.5 |
| Plant oil and/or fat X [parts] | 7.0 | 7.0 | 7.0 | 7.0 |
| Interesterified oil and/or fat A [parts] | 25.3 | 25.3 | 25.3 | 25.3 |
| Plant oil and/or fat L [parts] | 3.0 | 3.0 | 3.0 | 3.0 |
| Plant oil and/or fat M [parts] | 7.5 | 7.5 | 7.5 | 7.5 |
| Lecithin [parts] | 0.3 | 0.3 | 0.3 | 0.3 |
| Emulsifier A1 [parts] | 0 | 0.5 | 0 | 0.5 |
| Emulsifier C1 [parts] | 0 | 0 | 0.3 | 0.3 |
| Solidification time | ⊚ 6'51" | ⊚ 5'42" | ○ 7'40" | ⊚ 5'59" |
| Glossiness | 5.9 | 5.9 | 8.2 | 9.6 |
| Appearance gloss | × | × | ○ | ⊚ |
| **Flavor** | ○ | ○ | ○ | ○ |
| Stickiness | Δ | ○ | × | ⊚ |
| Total oil and/or fat content [%] | 47.0 | 46.8 | 46.9 | 46.6 |
| Fat-free cocoa solid content [%] | 0 | 0 | 0 | 0 |
| Dietary fiber amount [%] | 0 | 0 | 0 | 0 |
| Cocoa butter amount [%] | 2.5 | 2.5 | 2.5 | 2.5 |
| Interesterified oil and/or fat/oil and/or fat [%] | 68.5 | 68.5 | 68.5 | 68.5 |
| (C12 + C14)/(oil and/or fat) [%] | 32.8 | 32.8 | 32.8 | 32.8 |
| (C16 + C18)/(oil and/or fat) [%] | 37.9 | 37.9 | 37.9 | 37.9 |
| (CN36)/(oil and/or fat) [%] | 9.3 | 9.3 | 9.3 | 9.3 |
| Emulsifier A | Absent | Present | Absent | Present |
| Emulsifier C | Absent | Absent | Present | Present |
| Random interesterification | Present | Present | Present | Present |

The Example in which the emulsifiers were used in combination had an appropriate time required for solidification and a good gloss quality. Comparative Example 3 also had a good gloss, but tended to have a long time required for solidification, and was sticky over time.

An oily food in which the vegetable oil and/or fat X was changed to the vegetable oil and/or fat Y and an oily food containing no cocoa butter were prepared by the same method as in Example 1, and evaluated in the same manner as in Example 1.

The formulations and results are listed in Table 4.

**[Table 4]**

| | Example 1 | Example 2 | Example 3 |
|---|---|---|---|
| Whole milk powder [parts] | 7.0 | 7.0 | 0 |
| Sugar [parts] | 47.7 | 47.7 | 30.7 |
| Cocoa butter [parts] | 2.5 | 2.5 | 0 |
| Lactose [parts] | 0 | 0 | 26.5 |
| Plant oil and/or fat X [parts] | 7.0 | 0 | 7.0 |
| Plant oil and/or fat Y [parts] | 0 | 7.0 | 0 |
| Interesterified oil and/or fat A [parts] | 25.3 | 25.3 | 25.3 |
| Plant oil and/or fat L [parts] | 3.0 | 3.0 | 3.0 |
| Plant oil and/or fat M [parts] | 7.5 | 7.5 | 7.5 |
| Lecithin [parts] | 0.3 | 0.3 | 0.3 |
| Emulsifier A1 [parts] | 0.5 | 0.5 | 0.5 |
| Emulsifier C1 [parts] | 0.3 | 0.3 | 0.3 |
| Solidification time | ⊚ 5'59" | ○ 7'20" | ⊚ 6'10" |
| Glossiness | 9.6 | 10.9 | 9.0 |
| Appearance gloss | ⊚ | ⊚ | ⊚ |
| Flavor | ⊚ | ○ | ⊚ |
| Stickiness | ⊚ | ○ | ⊚ |
| Total oil and/or fat content [%] | 46.6 | 46.6 | 42.3 |
| Fat-free cocoa solid content [%] | 0 | 0 | 0 |
| Dietary fiber amount [%] | 0 | 0 | 0 |
| Cocoa butter amount/(oil and/or fat) [%] | 2.5 | 2.5 | 0 |
| (Interesterified oil and/or fat)/(oil and/or fat) [%] | 68.5 | 53.6 | 59.1 |
| (C12 + C14)/(oil and/or fat) [%] | 32.8 | 32.8 | 35.4 |
| (C16 + C18)/(oil and/or fat) [%] | 37.9 | 37.9 | 36.1 |
| (CN36)/(oil and/or fat) [%] | 9.3 | 9.4 | 9.7 |
| Emulsifier A | Present | Present | Present |
| Emulsifier C | Present | Present | Present |
| Random interesterification | Present | Present | Present |

The Examples in which the vegetable oils and/or fats were partially changed were slightly changed in gloss and solidification rate, but all had good quality. Among them, in Examples 1 and 3 in which the vegetable oil and/or fat X was blended, the stickiness over time was suppressed.

Oily foods in which the oils and/or fats were changed as shown in Table 5 were prepared by the same method as in Example 1, and evaluated in the same manner as in Example 1.

The formulations and results are listed in Table 5.

**[Table 5-1]**

| | Comparative Example 5 | Comparative Example 6 | Example 4 | Example 5 | Example 6 |
|---|---|---|---|---|---|
| Whole milk powder [parts] | 7.0 | 7.0 | 7.0 | 7.0 | 7.0 |
| Sugar [parts] | 47.7 | 47.7 | 47.7 | 47.7 | 47.7 |
| Cocoa butter [parts] | 2.5 | 2.5 | 2.5 | 2.5 | 2.5 |
| Plant oil and/or fat X [parts] | 0 | | 0 | 0 | 7.0 |
| Plant oil and/or fat Y [parts] | 0 | 4.3 | 4.3 | 4.3 | 0 |
| Plant oil and/or fat Z [parts] | 4.3 | 0 | 0 | 0 | 0 |
| Interesterified oil and/or fat A [parts] | 0 | 0 | 38.5 | 0 | 0 |
| Interesterified oil and/or fat B [parts] | 0 | 0 | 0 | 38.5 | 25.3 |
| Interesterified oil and/or fat C [parts] | 38.5 | 0 | 0 | 0 | 0 |
| Interesterified oil and/or fat D [parts] | 0 | 0 | 0 | 0 | 0 |
| Interesterified oil and/or fat E [parts] | 0 | 0 | 0 | 0 | 0 |
| Plant oil and/or fat L [parts] | 0 | 0 | 0 | 0 | 3.0 |
| Plant oil and/or fat M [parts] | 0 | 0 | 0 | 0 | 7.5 |
| Plant oil and/or fat N [parts] | 0 | 38.5 | 0 | 0 | 0 |
| Lecithin [parts] | 0.3 | 0.3 | 0.3 | 0.3 | 0.3 |
| Emulsifier A1 [parts] | 0.5 | 0.5 | 0.5 | 0.5 | 0.5 |
| Emulsifier C1 [parts] | 0.3 | 0.3 | 0.3 | 0.3 | 0.3 |
| Solidification time | × 13'55" | ⊚ 3'44" | ○ 8'33" | ○ 9'29" | ⊚ 6'43" |
| Glossiness | 11.7 | 4.9 | 26.7 | 25.4 | 17.5 |
| Appearance gloss | ⊚ | × | ⊚ | ⊚ | ⊚ |
| Flavor | Δ | Δ | ○ | ○ | ⊚ |
| Stickiness | Δ | ⊚ | ○ | ○ | ⊚ |
| Total oil and/or fat content [%] | 46.6 | 46.6 | 46.6 | 46.6 | 46.6 |
| Fat-free cocoa solid content [%] | 0 | 0 | 0 | 0 | 0 |
| Dietary fiber amount [%] | 0 | 0 | 0 | 0 | 0 |
| Cocoa butter amount [%] | 2.5 | 2.5 | 2.5 | 2.5 | 2.5 |
| (Interesterified oil and/or fat)/(oil and/or fat) [%] | 81.7 | 0 | 81.7 | 81.7 | 68.5 |
| (C12 + C14)/(oil and/or fat) [%] | 1.6 | 52.2 | 27.1 | 37.1 | 39.3 |
| (C16 + C18)/(oil and/or fat) [%] | 41.2 | 30.7 | 38 | 39.7 | 39 |
| (CN36)/(oil and/or fat) [%] | 2.6 | 18.8 | 5.9 | 9.9 | 12 |
| Emulsifier A | Present | Present | Present | Present | Present |
| Emulsifier C | Present | Present | Present | Present | Present |
| Random interesterification | Present | Absent | Present | Present | Present |

**[Table 5-2]**

| | Example 7 | Example 8 | Example 9 | Example 1 |
|---|---|---|---|---|
| Whole milk powder [parts] | 7.0 | 7.0 | 7.0 | 7.0 |
| Sugar [parts] | 47.7 | 47.7 | 47.7 | 47.7 |
| Cocoa butter [parts] | 2.5 | 2.5 | 2.5 | 2.5 |
| Plant oil and/or fat X [parts] | 7.0 | 7.0 | 7.0 | 7.0 |
| Plant oil and/or fat Y [parts] | 0 | 0 | 0 | 0 |
| Plant oil and/or fat Z [parts] | 0 | 0 | 0 | 0 |
| Interesterified oil and/or fat A [parts] | 0 | 0 | 0 | 25.3 |
| Interesterified oil and/or fat B [parts] | 0 | 0 | 0 | 0 |
| Interesterified oil and/or fat C [parts] | 25.3 | 0 | 0 | 0 |
| Interesterified oil and/or fat D [parts] | 0 | 25.3 | 0 | 0 |
| Interesterified oil and/or fat E [parts] | 0 | 0 | 25.3 | 0 |
| Plant oil and/or fat L [parts] | 3.0 | 3.0 | 3.0 | 3.0 |
| Plant oil and/or fat M [parts] | 7.5 | 7.5 | 7.5 | 7.5 |
| Plant oil and/or fat N [parts] | 0 | 0 | 0 | 0 |
| Lecithin [parts] | 0.3 | 0.3 | 0.3 | 0.3 |
| Emulsifier A1 [parts] | 0.5 | 0.5 | 0.5 | 0.5 |
| Emulsifier C1 [parts] | 0.3 | 0.3 | 0.3 | 0.3 |
| Solidification time | ○ 7'35" | ○ 7'40" | ○ 8'00" | ⊚ 5'59" |
| Glossiness | 8.4 | 16.4 | 16.0 | 9.6 |
| Appearance gloss | ○ | ⊚ | ⊚ | ⊚ |
| Flavor | ⊚ | ⊚ | ⊚ | ⊚ |
| Stickiness | ○ | ○ | ○ | ⊚ |
| Total oil and/or fat content [%] | 46.6 | 46.6 | 46.6 | 46.6 |
| Fat-free cocoa solid content [%] | 0 | 0 | 0 | 0 |
| Dietary fiber amount [%] | 0 | 0 | 0 | 0 |
| Cocoa butter amount [%] | 2.5 | 2.5 | 2.5 | 2.5 |
| (Interesterified oil and/or fat)/(oil and/or fat) [%] | 68.5 | 68.5 | 68.5 | 68.5 |
| (C12 + C14)/(oil and/or fat) [%] | 16.1 | 41.9 | 41.5 | 32.8 |
| (C16 + C18)/(oil and/or fat) [%] | 40 | 33.3 | 33.4 | 37.9 |
| (CN36)/(oil and/or fat) [%] | 7.4 | 12 | 10.4 | 9.3 |
| Emulsifier A | Present | Present | Present | Present |
| Emulsifier C | Present | Present | Present | Present |
| Random interesterification | Present | Present | Present | Present |

The Examples obtained a good gloss, and were also good in other evaluations. The Comparative Examples containing no interesterified oil and/or fat had a short time required for solidification, but were poor in appearance gloss. In addition, in Comparative Example 5, it took a long time to solidify even when the interesterified oil and/or fat was contained, and the stickiness over time was caused.

Oily foods in which the oils and/or fats were changed as shown in Table 6 were prepared by the same method as in Example 1, and evaluated in the same manner as in Example 1.

The formulations and results are listed in Table 6.

**[Table 6]**

| | Example 10 | Example 11 | Example 12 | Example 13 |
|---|---|---|---|---|
| Whole milk powder [parts] | 7.0 | 7.0 | 7.2 | 7.2 |
| Sugar [parts] | 47.7 | 47.7 | 58.3 | 58.3 |
| Cocoa butter [parts] | 2.5 | 2.5 | 2.6 | 2.6 |
| Plant oil and/or fat X [parts] | 5.0 | 5.0 | 3.8 | 3.8 |
| Interesterified oil and/or fat A [parts] | 16.3 | 0 | 11.5 | 0 |
| Plant oil and/or fat N [parts] | 12.5 | 12.5 | 9.6 | 9.6 |
| Plant oil and/or fat M [parts] | 9.0 | 9.0 | 7.0 | 7.0 |
| Interesterified oil and/or fat B [parts] | 0 | 16.3 | 0 | 11.5 |
| Lecithin [parts] | 0.3 | 0.3 | 0.3 | 0.3 |
| Emulsifier A1 [parts] | 0.5 | 0.5 | 0.5 | 0.5 |
| Emulsifier C1 [parts] | 0.3 | 0.3 | 0.3 | 0.3 |
| Solidification time | ⊚ 5'20" | ⊚ 5'50" | ○ 7'20" | ○ 7'55" |
| Glossiness | 8.6 | 8.9 | 7.8 | 8.4 |
| Appearance gloss | ○ | ○ | ○ | ○ |
| Flavor | ○ | ○ | ⊚ | ⊚ |
| Stickiness | ⊚ | ⊚ | ○ | ○ |
| Total oil and/or fat content [%] | 46.6 | 46.6 | 36.4 | 36.4 |
| Fat-free cocoa solid content [%] | 0 | 0 | 0 | 0 |
| Dietary fiber amount [%] | 0 | 0 | 0 | 0 |
| Cocoa butter amount [%] | 2.5 | 2.5 | 2.6 | 2.6 |
| (Interesterified oil and/or fat)/(oil and/or fat) [%] | 45.2 | 45.2 | 42.1 | 42.1 |
| (C12 + C14)/(oil and/or fat) [%] | 40.3 | 44.5 | 39.6 | 43.5 |
| (C16 + C18)/(oil and/or fat) [%] | 36.00 | 36.8 | 36.5 | 37.2 |
| (CN36)/(oil and/or fat) [%] | 12.8 | 14.5 | 12.8 | 14.4 |
| Emulsifier A | Present | Present | Present | Present |
| Emulsifier C | Present | Present | Present | Present |
| Random interesterification | Present | Present | Present | Present |

As compared with Example 1, the time required for solidification and the quality of gloss could be retained even when the ratio of the interesterified oil and/or fat in the oils and/or fats was decreased.

Oily foods in which the type and addition amount of the emulsifier were changed as shown in Table 7 were prepared by the same method as in Example 1, and evaluated in the same manner as in Example 1.

The emulsifiers indicated below were used.

As Emulsifier A, a mixture of a monoester and a diester, which is a glycerin fatty acid ester with an HLB of 2.8, having behenic acid as the main constituent fatty acid was used as Emulsifier A2.

As Emulsifier A3, a monoester, which is a glycerin fatty acid ester with an HLB of 6, having stearic acid as the main constituent fatty acid was used.

As Emulsifier B1, a sucrose fatty acid ester with an HLB of 1 having palmitic acid as the main constituent fatty acid was used.

As Emulsifier B2, a sucrose fatty acid ester with an HLB of 1 or less having stearic acid as the main constituent fatty acid was used.

For comparison, a decaglycerol octaester, which is a glycerol fatty ester with an HLB of 3.7, having erucic acid as the main constituent fatty acid was used as Emulsifier A1.

Polyglycerol-condensed ricinoleate was used as Emulsifier A2. The HLB was about 1.

Since the oils and/or fats used were the same as in Example 1, the component values in the oils and/or fats were the same as in Example 1. The formulations and results are listed in Table 7.

**[Table 7]**

| | Example 1 | Example 14 | Example 15 | Example 16 | Example 17 | Comparative Example 7 | Comparative Example 8 |
|---|---|---|---|---|---|---|---|
| Whole milk powder [parts] | 7.0 | 7.0 | 7.0 | 7.0 | 7.0 | 7.0 | 7.0 |
| Sugar [parts] | 47.7 | 47.7 | 47.7 | 47.7 | 47.7 | 47.7 | 47.7 |
| Cocoa butter [parts] | 2.5 | 2.5 | 2.5 | 2.5 | 2.5 | 2.5 | 2.5 |
| Plant oil and/or fat X [parts] | 7.0 | 7.0 | 7.0 | 7.0 | 7.0 | 7.0 | 7.0 |
| Interesterified oil and/or fat A [parts] | 25.3 | 25.3 | 25.3 | 25.3 | 25.3 | 25.3 | 25.3 |
| Plant oil and/or fat L [parts] | 3.0 | 3.0 | 3.0 | 3.0 | 3.0 | 3.0 | 3.0 |
| Plant oil and/or fat M [parts] | 7.5 | 7.5 | 7.5 | 7.5 | 7.5 | 7.5 | 7.5 |
| Lecithin [parts] | 0.3 | 0.3 | 0.3 | 0.3 | 0.3 | 0.3 | 0.3 |
| Emulsifier A1 [parts] | 0.5 | 0 | 0 | 0 | 0 | 0 | 0 |
| Emulsifier A2 [parts] | 0 | 0.5 | 0 | 0 | 0 | 0 | 0 |
| Emulsifier A3 [parts] | 0 | 0 | 0.5 | 0 | 0 | 0 | 0 |
| Emulsifier B1 [parts] | 0 | 0 | 0 | 0.5 | 0 | 0 | 0 |
| Emulsifier B2 [parts] | 0 | 0 | 0 | 0 | 0.5 | 0 | 0 |
| Emulsifier al [parts] | 0 | 0 | 0 | 0 | 0 | 0.5 | 0 |
| Emulsifier a2 [parts] | 0 | 0 | 0 | 0 | 0 | 0 | 0.1 |
| Emulsifier C1 [parts] | 0.3 | 0.3 | 0.3 | 0.3 | 0.3 | 0.3 | 0 |
| Solidification time | ⊚ 5'59" | ⊚ 6'40" | ○ 7'25" | ○ 7'35" | ○ 7'10" | ○ 6'50" | × 10'20" |
| Appearance gloss | ⊚ | ⊚ | ○ | ⊚ | ⊚ | × | ⊚ |
| Flavor | ⊚ | ⊚ | ⊚ | ⊚ | ○ | ⊚ | ⊚ |
| Stickiness | ⊚ | ⊚ | ○ | ⊚ | ⊚ | Δ | × |
| Total oil and/or fat content [%] | 46.6 | 46.6 | 46.6 | 46.6 | 46.6 | 46.6 | 46.6 |
| Fat-free cocoa solid content [%] | 0 | 0 | 0 | 0 | 0 | 0 | 0 |
| Dietary fiber amount [%] | 0 | 0 | 0 | 0 | 0 | 0 | 0 |
| Cocoa butter amount [%] | 2.5 | 2.5 | 2.5 | 2.5 | 2.5 | 2.5 | 2.5 |
| Emulsifier A | Present | Present | Present | Absent | Absent | Absent | Absent |
| Emulsifier B | Absent | Absent | Absent | Present | Present | Absent | Absent |
| Emulsifier C | Present | Present | Present | Present | Present | Present | Absent |
| Random interesterification | Present | Present | Present | Present | Present | Present | Present |

Comparative Example 8 was improved in appearance gloss, but required a long time to solidify and was sticky over time. From the results of Examples 16 and 17, the same effects as those obtained by the combination of Emulsifier A and Emulsifier C could be confirmed also with the combination of Emulsifier B and Emulsifier C. When a glycerin fatty acid ester containing behenic acid was used as Emulsifier A, the solidification time, the appearance gloss, and the stickiness were particularly good.

### Industrial Applicability

The present invention can provide an oily food for coating which has good coating workability, a time required for solidification suitable for continuous production, and a good gloss, even though having a low fat-free cocoa solid content. Further, the present invention can provide a composite food which is less sticky over time when the oily food for coating of the present invention is used in confectioneries and bakery products.

## Claims

1. An oily food for coating, comprising:
a fat-free cocoa solid content of 3 wt.% or less, and
a cocoa butter content of from 0 to 10 wt.%,
the oily food containing Emulsifier A and Emulsifier C, or Emulsifier B and Emulsifier C, and
satisfying the following conditions 1) to 3):
1) constituent fatty acids in an oil and/or fat of the oily food contain a total of from 15 wt.% to 50 wt.% of a saturated fatty acid having 12 carbons and a saturated fatty acid having 14 carbons;
2) constituent fatty acids in an oil and/or fat of the oily food contain a total of from 30 wt.% to 45 wt.% of a saturated fatty acid having 16 carbons and a saturated fatty acid having 18 carbons; and
3) constituent triglycerides in an oil and/or fat of the oily food contain from 5 to 16 wt.% of CN36,
Emulsifier A: one or more emulsifiers selected from glycerin fatty acid esters having an HLB of less than 9, the glycerin fatty acid esters containing, as a main constituent fatty acid, a saturated fatty acid having from 16 to 24 carbons;
Emulsifier B: one or more emulsifiers selected from sucrose fatty acid esters having an HLB of less than 3, the sucrose fatty acid esters containing, as a main constituent fatty acid, a saturated fatty acid having from 16 to 24 carbons;
Emulsifier C: one or more emulsifiers selected from sucrose fatty acid esters having an HLB of 3 or more, the sucrose fatty acid esters containing, as a main constituent fatty acid, a saturated fatty acid having from 16 to 24 carbons;
CN36: a triglyceride in which a total number of carbons of constituent fatty acids is 36 in the triglycerides in the oil and/or fat.

2. The oily food for coating according to claim 1, wherein the emulsifiers contained are Emulsifier A and Emulsifier C.

3. The oily food for coating according to claim 1 or 2, wherein the oil and/or fat of the oily food contains from 40 to 85 wt.% of an interesterified oil and/or fat having a melting point of from 32 to 42°C.

4. The oily food for coating according to claim 3, wherein the interesterified oil and/or fat contained in the oil and/or fat of the oily food satisfies the following conditions 4) to 6):
4) the interesterified oil and/or fat is a random interesterified oil;
5) constituent fatty acids in the interesterified oil and/or fat contain a total of from 25 to 60 wt.% of a saturated fatty acid having 12 carbons and a saturated fatty acid having 14 carbons; and
6) the interesterified oil and/or fat contains from 30 to 60 wt.% of triglycerides (CN36 to 42) in which a total number of carbons of constituent fatty acids is from 36 to 42 in the triglycerides in the interesterified oil and/or fat.

5. An oily food for coating, comprising:
a fat-free cocoa solid content of 3 wt.% or less, and
a cocoa butter content of from 0 to 10 wt.%,
the oily food containing Emulsifier A and Emulsifier C, or Emulsifier B and Emulsifier C, and
an oil and/or fat of the oily food satisfying the following conditions:
(a) the oil and/or fat contains from 40 to 85 wt.% of an interesterified oil and/or fat having a melting point of from 32 to 42°C; and
(b) the oil and/or fat contains from 20 to 50 wt.% of lauric hard butter,
Emulsifier A: one or more emulsifiers selected from glycerin fatty acid esters having an HLB of less than 9, the glycerin fatty acid esters containing, as a main constituent fatty acid, a saturated fatty acid having from 16 to 24 carbons;
Emulsifier B: one or more emulsifiers selected from sucrose fatty acid esters having an HLB of less than 3, the sucrose fatty acid esters containing, as a main constituent fatty acid, a saturated fatty acid having from 16 to 24 carbons; and
Emulsifier C: one or more emulsifiers selected from sucrose fatty acid esters having an HLB of 3 or more, the sucrose fatty acid esters containing, as a main constituent fatty acid, a saturated fatty acid having from 16 to 24 carbons.

6. A method for producing the oily food for coating according to any one of claims 1, 2, and 5.

7. A method for producing the oily food for coating according to claim 3.

8. A method for producing the oily food for coating according to claim 4.

9. A composite food coated with the oily food for coating according to any one of claims 1, 2, and 5.

10. A composite food coated with the oily food for coating according to claim 3.

11. A composite food coated with the oily food for coating according to claim 4.

12. A method for producing a composite food having a good gloss by using the oily food for coating according to any one of claims 1, 2, and 5.

13. A method for producing a composite food having a good gloss by using the oily food for coating according to claim 3.

14. A method for producing a composite food having a good gloss by using the oily food for coating according to claim 4.

15. A method for improving gloss by using the oily food for coating according to any one of claims 1, 2, and 5.

16. A method for improving gloss by using the oily food for coating according to claim 3.

17. A method for improving gloss by using the oily food for coating according to claim 4.
